# EUROPÄISCHE PATENTSCHRIFT

(11) **EP 0 516 641 B1**
(45) Veröffentlichungstag und Bekanntmachung des Hinweises auf die Patenterteilung: **10.08.1994**
(21) Anmeldenummer: 91903350.6
(22) Anmeldetag: 11.02.1991
(51) Int. Cl.: G02B 23/02, G02B 23/16

(54) **MONOKULARES TELESKOP**
MONOCULAR TELESCOPE
TELESCOPE MONOCULAIRE

(30) Priorität: 19.02.1990 DE 9001937 U
(43) Veröffentlichungstag der Anmeldung: 09.12.1992
(73) Patentinhaber: Zapp, Walter, CH-9413 Oberegg (CH)
(72) Erfinder: Zapp, Walter, CH-9413 Oberegg (CH)
(74) Vertreter: Knefel, Siegfried, Dipl.-Math.
(86) Internationale Anmeldenummer: EP9100269
(87) Internationale Veröffentlichungsnummer: WO9112550

(56) Entgegenhaltungen:
- WO-A-89/05990
- GB-A- 0 406 336
- GB-A- 2 051 403
- US-A- 4 540 238
- Patent abstracts of Japan, vol. 8, no. 179 (P-295)(1616), 17 August 1984 & JP A 5972416
- Patent Abstracts of Japan, vol. 8, no 72 (P-265)(1509), 4 April 1984 & JP A 58217911

## Beschreibung

Die Erfindung betrifft ein monokulares Teleskop nach dem Oberbegriff des Anspruches 1.

Bei starker Vergrößerung ist das Gesichtsfeld eines derartigen Teleskopes klein, wodurch es schwierig ist, einen bestimmten Gegenstand anzuvisieren.

Aufgabe der Erfindung ist es, ein monokulares Teleskop mit einem Sucher zu versehen, derart, daß der Benutzer bei ortsfest bleibendem Teleskop lediglich den Blickwinkel seines Auges zu ändern braucht, um vom Sucherbild auf das Teleskopbild überzuwechseln und umgekehrt.

Diese Aufgabe wird durch das kennzeichnende Merkmal des Anspruches 1 gelöst. Der Benutzer hat es jetzt in der Hand, mit dem Sucher bei relativ großem Gesichtsfeld einen Gegenstand anzuvisieren und bei festgehaltenem Teleskop lediglich den Blickwinkel des Auges geringfügig zu ändern, um jetzt ein vergrößertes Bild des anvisierten Gegenstandes im Teleskop zu sehen. Der Augendrehpunkt ist hierbei durch den Schnittpunkt der optischen Achsen des Sucherokulares und des Teleskopokulares bestimmt. Diese Lage nimmt das Auge bei Benutzung des Teleskopes ohnehin ein, das heißt die Augenlage braucht nicht verändert zu werden.

Damit das Teleskop gut bedient werden kann und sich die Strahlengänge des Sucherokulares und des Teleskopokulares im Drehpunkt des Auges treffen können, sind Teleskop und Sucher in einem gemeinsamen Gehäuse untergebracht, wobei das Gehäuse in Blickrichtung gesehen flach ausgebildet ist. Der Sucherstrahlengang kann hierbei in etwa in Richtung des Teleskopausblickes durch die Flachseite durch das Gehäuse treten. Der Teleskopstrahlengang ist im Gehäuse wegen seiner größeren Länge aufgewickelt.

Ein derartiges Teleskop kann wegen seines flachen Gehäuses wie ein Zigarettenetui oder eine Brieftasche oder dergleichen in der Tasche eines Kleidungsstückes untergebracht werden. Trotzdem leistet das Teleskop dasselbe wie jedes andere monokulare Fernrohr.

Bei der erfindungsgemäßen Ausbildung liegen die Objektiv- und Okularlinsen praktisch in unmittelbarer Nähe der Außenwand des Gehäuses. Um sie zu schützen, sind in weiterer Ausgestaltung der Erfindung Blenden vorgesehen, welche durch Drehen eines leicht erreichbaren Knopfes, beispielsweise in einer der oberen Ecken des Teleskopgehäuses, betätigt werden können.

Auch Bedienungselemente, zum Beispiel für die Scharfeinstellung, liegen vorteilhaft günstig in einer der oberen Ecken des Gehäuses.

Für die flache Ausbildung des Teleskopes bedarf es einer Führung des Abbildungsstrahlenganges, der flach verläuft, was einerseits durch die Teilung der Frontlinse des Objektives mit zwischengeschaltetem ersten Umkehrspiegel gewährleistet wird, und andererseits durch die flach verlaufende Aufwicklung des Strahlenganges im Gehäuse bewirkt wird.

Die Scharfeinstellung wird gewährleistet, indem zwei der Umkehrspiegel in Richtung der abgeknickten Objektivachse verschiebbar ausgebildet sind, was durch einen am Gehäuse angebrachten Drehknopf bewirkt werden kann.

Weitere Einzelheiten der Erfindung sind den Unteransprüchen und der Beschreibung der Zeichnung zu entnehmen.

Auf der Zeichnung ist ein Ausführungsbeispiel der Erfindung dargestellt, und zwar zeigen:
- Fig. 1: die Vorderansicht des Teleskopes;
- Fig. 2: die Seitenansicht des Teleskopes;
- Fig. 3: die Rückseite des Teleskopes;
- Fig. 4: einen Schnitt nach der Linie IV-IV der Fig. 2;
- Fig. 5: einen Schnitt nach der Linie V-V der Fig. 3;
- Fig. 6: einen Schnitt nach der Linie VI-VI der Fig. 2, Schnitt IV-IV der Fig. 10;
- Fig. 7: den optischen Aufbau des Teleskopes in der Ansicht der Fig. 3;
- Fig. 8: den optischen Aufbau der Fig. 7 in Seitenansicht, Schnitt X-X der Fig. 7;
- Fig. 9: den Strahlengang des Suchers und des Leuchtringes (30);
- Fig. 10: einen Schnitt nach der Linie XI-XI der Fig. 7;
- Fig. 11: die Draufsicht auf den Strahlengang in Richtung des Pfeiles XII der Fig. 7;
- Fig. 12: eine Darstellung des Sucherbildes;
- Fig. 13: das Teleskopbild im Größenvergleich zum Sucherbild der Fig. 12 mit nebengeordneter Meßskala.

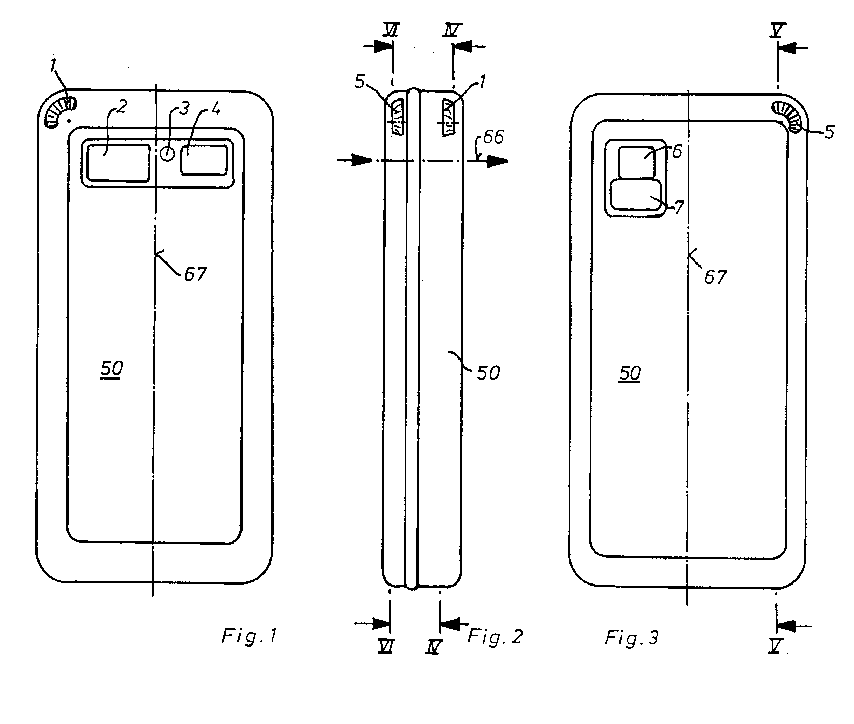

Wie aus den Fig. 1 bis 3 zu erkennen ist, weist das Gehäuse (50) des Teleskopes Rechteckform auf. Fig. 1 zeigt die Vorderansicht des Gehäuses. Die Frontlinse des Teleskopobjektives ist mit (2) bezeichnet, die Frontlinse des Sucherobjektives trägt die Bezugszahl (4). Außerdem ist auf der Vorderseite des Gehäuses eine Lichteintrittsöffnung (3) für die Beleuchtung einer Markierung im Sucherbild vorgesehen.

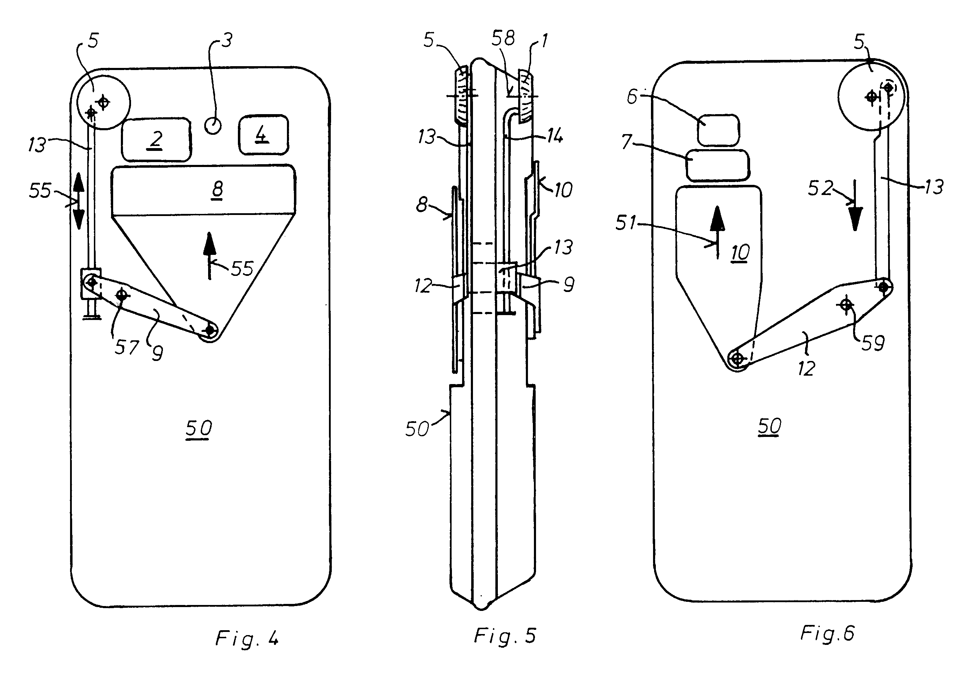

Ein Drehknopf (1) bewirkt die Scharfeinstellung des Teleskopes. Ein weiterer Drehknopf (5) (Fig. 6) wirkt über eine Hebelübersetzung (13, 12) auf eine Verschlußlamelle, welche in Richtung des Pfeiles (51) verschiebbar ist, um das Sucherokular (6) sowie das Teleskopokular (7) (Fig. 6) bei Nichtgebrauch abzudecken. Der Drehknopf (5) betätigt zugleich über Hebel (13, 9) eine Verschlußlamelle (8) für die Frontlinsen des Teleskopobjektives und des Sucherobjektives, wenn das Teleskop nicht gebraucht wird.

Wie aus Fig. 2 zu erkennen ist und ebenso aus Fig. 5, ist das Gehäuse (50) sehr flach ausgebildet, so daß es beispielsweise in eine Westentasche gesteckt werden kann oder aber auch in eine andere Jackentasche.

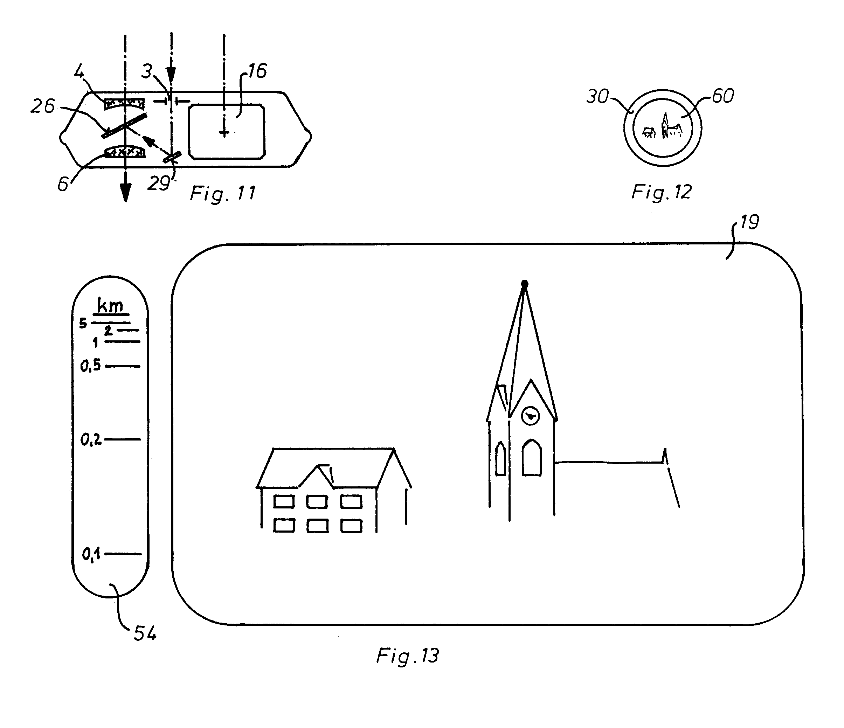

Das Sucherokular (6) und die Augenlinse (7) des Teleskopokulares sind gemäß Fig. 3 sehr nahe übereinanderliegend angeordnet, so daß der Benutzer sein Auge lediglich vom Sucherokular (6) um einen kleinen Winkel zur Augenlinse (7) des Teleskopokulares zu drehen hat, um vom Sucherbild (Fig. 12) auf den vergrößerten Ausschnitt (Fig. 13) überzuwechseln. Der Augendrehpunkt liegt im Schnittpunkt (28) der optischen Achse der Augenlinse (7) des Teleskopokulares und der optischen Achse des Sucherokulares (6).

Die Frontlinse (2) des Teleskopobjektives und das Sucherobjektiv (4) liegen nebeneinander und den Platz im Gehäuse ausnutzend im Abstand voneinander zu beiden Seiten der Mittellinie (67). Zwischen ihnen ist ein Fenster (3) für die Beleuchtung eines Leuchtkreises (30) vorgesehen. Die Entfernungsskala (54) dient zur Bestimmung der Entfernung des anvisierten Objektes, gemäß Fig. 13 einer Kirche und/oder eines Hauses, wenn man die Größe dieser Gegenstände kennt oder vermutet.

Der Leuchtkreis (30) wird in den Sucherstrahlengang in die Mitte des Sucherbildes (60) eingespiegelt. Das von ihm umschlossene Objekt erscheint im Bildfeld (19) des Teleskopes vergrößert.

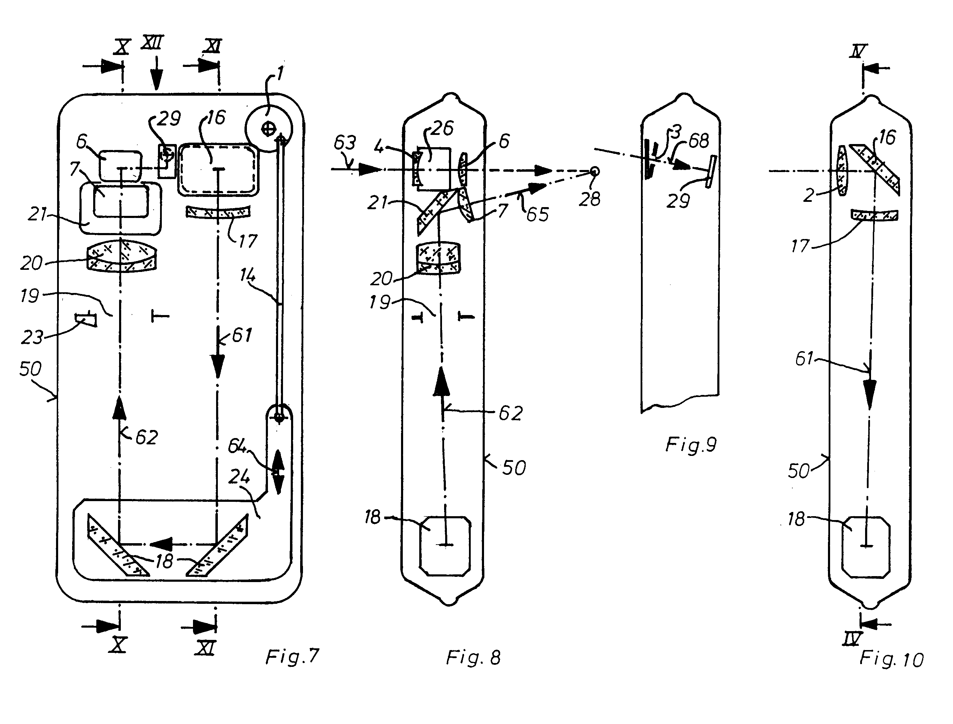

Gemäß Fig. 7 betätigt der Drehknopf (1) die Stange (14) in Richtung des Pfeiles (55), so daß der Spiegelschlitten (24) zwecks Scharfeinstellung in der Pfeilrichtung (64) verschiebbar ist.

In der Betriebsstellung des Teleskopes sieht man im Sucher ein Bild (60) gemäß Fig. 12 im verkleinerten Maßstab.

Ändert man jetzt die Blickrichtung des Auges nach unten, beispielsweise in Fig. 3 vom Sucherokular (6) zum Teleskopokular (7), erhält man ein vergrößertes Bild (19) des Sucherbildes (60). Neben dem Bild (19) kann die Entfernungsskala (54) vorgesehen sein, welcher ein Umlenkprisma (23) vorgeschaltet ist.

Da das Teleskop äußerst flach ausgebildet ist, müssen die optischen Elemente, welche der Abbildung dienen, so im Gehäuse (50) angeordnet werden, daß sie einerseits eine einwandfreie Abbildung gewährleisten, zum anderen eine Scharfeinstellung auf den zu betrachtenden Gegenstand ermöglichen, schließlich aber auch die üblicherweise notwendige Bildumkehr bewirken.

Um dies zu erreichen, sind das Objektiv und das Okular jedes für sich chromatisch korrigiert. Das Teleskopobjektiv (2, 17) (Fig. 10) ist als Achromat geteilt ausgebildet, derart, daß die chromatische Korrektur in den zweiten Teil (17) des Objektives verlagert ist. Die Korrektur des Teleskopokulares (7) ist, damit die Augenlinse nicht um Mehrfaches dick wird, in die Feldlinse (20) verlegt, weil hier in Strahlenrichtung mehr Raum zur Verfügung steht.

Gemäß Fig. 10 ist zwischen der Frontlinse (2) und dem zweiten Teil (17) des Teleskopobjektives ein erster Planspiegel (16) vorgesehen, der den Strahlengang in Richtung des Pfeiles (61) etwa senkrecht in die Basisebene, etwa um 30 Winkelminuten zur Senkrechten geneigt, nach unten in das Gehäuse lenkt. Das Bildfeld ist mit (19) bezeichnet (Fig. 7 und 8). Der Strahlengang trifft im unteren Teil des Gehäuses (50) auf zwei rechtwinklig zueinander angeordnete Planspiegel (18), die den Strahlengang in Richtung des Pfeiles (62) nach oben lenken. Damit erreicht der Strahlengang seitlich zur Mittelachse (67) im Gehäuse versetzt das Okular. Er trifft auf einen weiteren Planspiegel (21), der die Abbildungsstrahlen über die Augenlinse (7) des Teleskopokulares in den Drehpunkt des Auges (28) lenkt. Durch diese Ausbildung wird erheblich Raum eingespart und die Flachheit des Strahlenverlaufes gewährleistet.

Dem Sucherobjektiv (4) (Fig. 8) ist ein teildurchlässiger Spiegel (26) nachgeschaltet. Beim Durchtritt der Strahlen in Richtung des Pfeiles (63) wird der Sucherstrahlengang über das Sucherokular (6) (Augenlinse) zum Augendrehpunkt (28) geführt. Je nachdem, ob man durch die Frontlinse (2) des Teleskopobjektives (Fig. 1) oder durch das Sucherobjektiv (4) (Fig. 1) blickt, sieht man den Gegenstand durch den Teleskopstrahlengang in vergrößerter Darstellung oder durch den Sucherstrahlengang im großen Gesichtsfeld. Hierzu ist nur eine geringfügige Schwenkung des menschlichen Auges erforderlich.

Der teildurchlässige Spiegel (26) ist vorgesehen, um das durch die Öffnung (3) einfallende Licht als Leuchtkreis in das Sucherbild einzuspiegeln.

Der Hauptvorteil der Erfindung wird darin gesehen, ein äußerst flaches monokulares Teleskop zu schaffen, das jedoch die volle optische Qualität eines hochwertigen Teleskopes aufweist, das eine Fokussierung gestattet und darüber hinaus einen Sucher aufweist, um zunächst ein großes übersichtsfeld zu erhalten und in diesem nur durch eine kleine Schwenkung des menschlichen Auges ohne Lageänderung des Teleskopes vom Sucherstrahlengang auf den Teleskopstrahlengang einen vergrößerten Ausschnitt zu sehen. Hierzu sind beide Okulare derart angeordnet, daß das Gehäuse praktisch rechts neben dem Betrachterauge liegt. Diese Anordnung ist nicht zwingend. Es könnte genauso gut links davon angeordnet sein, wenn jemand linksäugig besser sieht. Der Strahlengang braucht dann nur symmetrisch vertauscht zu werden.

Der weitere Vorteil des Teleskopes besteht darin, daß durch den Drehknopf (5) eine Abdeckung der Linsen und damit ein Verschluß des inneren gesamten Gehäuses stattfindet, so daß das Teleskop auch für den robusten Gebrauch geeignet ist.

Außerdem gewährleistet der Drehknopf (1) (Fig. 7) eine Verschiebung der zwei Spiegel (18) in Richtung des Pfeiles (64), wodurch die Scharfeinstellung gewährleistet wird.

Der Spiegel (21) ist derart angestellt, daß er den Strahlengang, wie in Fig. 8 dargestellt, in Richtung des Pfeiles (65) schräg aufwärts aus dem Teleskop austreten läßt, so daß er mit dem horizontalen Sucherstrahlengang in den Zusammenführungspunkt (28) einläuft. Zur Entferungsschätzung ist eine Entfernungsskala (54) vorgesehen. Die Entfernungsskala (54) ist neben dem Bildfeld angeordnet, damit sie nicht den Gebrauch des Teleskopes stört. Die seitlich vom Bildfeld liegende Entfernungsskala (54) erfordert ein zusätzliches Umlenkelement, nämlich das Prisma (23), welches auch als prismatisches Linsenrandsegment ausgebildet sein kann. Damit können in platzsparender Weise die gewünschten Bilder einschließlich der Einspiegelungen betrachtet werden.

### Bezugszahlen

- 1: Scharfeinstellrad
- 2: Frontlinse (positiv) des Teleskopobjektives
- 3: Fenster für Suchermarkierung mit Leuchtkreis
- 4: Sucherobjektiv
- 5: Drehknopf
- 6: Sucherokular
- 7: Augenlinse des Teleskopokulares
- 8: Objektivverschließlamelle
- 9: Hebel für die Verschließlamelle
- 10: Okularverschluß
- 12: Hebel für den Okularverschluß
- 13: Pleuelstange für die Teile 9 und 12, verbunden mit dem Rad 5
- 14: Pleuelstange für 1
- 16: Objektivspiegel
- 17: zweiter Teil des Teleskopobjektives (Negativlinse), leicht geneigt
- 18: Mittelspiegel (Winkelspiegel)
- 19: Bildfeld
- 20: Feldlinse (achromatisch) des Teleskopokulares
- 21: Okularspiegel
- 23: prismatischer Skalenträger für 19
- 24: Schlitten für die Spiegel 18
- 26: teildurchlässiger Spiegel
- 28: Sucher und Abbildungsstrahlengangtreffpunkt
- 29: vollverspiegelter Umlenkspiegel
- 30: Leuchtmarkierung (Leuchtkreis)
- 50: Gehäuse
- 51: Pfeil
- 52: Pfeil
- 54: Entfernungsskala
- 55: Pfeil
- 57: Zapfen
- 58: Welle
- 59: Drehpunkt
- 60: Bildfeld für Sucher
- 61: Richtungspfeil
- 62: Richtungspfeil
- 63: Richtungspfeil
- 64: Richtungspfeil
- 65: Richtungspfeil
- 66: Blickrichtung (Pfeil)
- 67: Mittellinie des Gehäuses
- 68: schräg von oben verlaufender Strahlengang für Leuchtkreis 30

## Patentansprüche

1. Einen Sucher aufweisendes, monokulares Teleskop, **dadurch gekennzeichnet,** daß das Teleskop und der Sucher eine gemeinsame Blickrichtung (66) aufweisen, daß im Teleskopstrahlengang ein Spiegelsystem vorgesehen ist, daß der Sucher mindestens ein Sucherobjektiv (4) und ein Sucherokular (6) aufweist, die eine optische Achse (63) haben, daß das Teleskop mindestens ein Teleskopobjektiv (2, 17) und ein Teleskopokular (20, 7) mit einer Augenlinse (7) aufweist, und daß sich die Achsen (63, 65) des Sucherokulares (6) und des Teleskopokulares (7) hinter den Okularen (6, 7) im Augendrehpunkt (28) des Betrachters schneiden.

2. Teleskop nach Anspruch 1, dadurch gekennzeichnet, daß die Augenlinse (7) des Teleskopokulares und das Sucherokular (6) unmittelbar übereinanderliegend angeordnet sind.

3. Teleskop nach Anspruch 1, dadurch gekennzeichnet, daß die optische Achse (65) der Augenlinse (7) des Teleskopokulares zum Auge hin schräg aufwärts gerichtet ist.

4. Teleskop nach Anspruch 1, dadurch gekennzeichnet, daß die optische Achse des Suchers (4, 6) geradlinig zum Auge verläuft.

5. Teleskop nach Anspruch 1, dadurch gekennzeichnet, daß ein Gehäuse (50) das Teleskop und den Sucher einschließt, das in Blickrichtung (66) flach ausgebildet ist.

6. Teleskop nach Anspruch 1 und 5, dadurch gekennzeichnet, daß der Sucherstrahlengang in etwa senkrecht die Flachseite des Gehäuses (50) durchsetzt.

7. Teleskop nach Anspruch 5, dadurch gekennzeichnet, daß der Abbildungsstrahlengang des Teleskopes derart abgewinkelt ist, daß die optische Achse im Gehäuse (50) im wesentlichen einen flachen, etwa rechtwinkligen Weg beschreibt.

8. Teleskop nach Anspruch 1 und 5, dadurch gekennzeichnet, daß das Gehäuse etwa rechtwinklig ausgebildet ist und die längere Seite des Rechteckes bei Gebrauch des Teleskopes nach unten weist.

9. Teleskop nach Anspruch 1 und 5, dadurch gekennzeichnet, daß auf der einen Seite des Gehäuses (50) die Frontlinse (2) des Teleskopobjektives und die Frontlinse (4) des Sucherobjektives vorgesehen sind und auf der Rückseite des Gehäuses die Augenlinse (7) des Teleskopokulares und das Sucherokular (6).

10. Teleskop nach Anspruch 1, dadurch gekennzeichnet, daß die Frontlinse (2) des Teleskopobjektives im oberen Teil des Gehäuses (50) angeordnet ist und die Augenlinse (7) des Teleskopokulares ebenfalls, jedoch auf dessen Rückseite, und daß beide Linsen zur Mittellinie (67) des Gehäuses versetzt angeordnet sind.

11. Teleskop nach Anspruch 1 und 5, dadurch gekennzeichnet, daß das Teleskopobjektiv aus zwei voneinander getrennten Linseneinheiten (2, 17) besteht, zwischen denen der erste Planspiegel (16) des Umkehrsystemes vorgesehen ist, derart, daß dieser den Abbildungsstrahlengang in den unteren Teil des Gehäuses (50) lenkt.

12. Teleskop nach Anspruch 11, dadurch gekennzeichnet, daß der Planspiegel (16) zwischen den Linseneinheiten zur Einfallachse der Lichtstrahlen mit einer geringen Abweichung von 45° geneigt angeordnet ist.

13. Teleskop nach Anspruch 11, dadurch gekennzeichnet, daß der Spiegel (16) den Strahlengang leicht geneigt zur Objektivseite nach unten lenkt.

14. Teleskop nach Anspruch 11, dadurch gekennzeichnet, daß im unteren Teil des Gehäuses (50) zwei Spiegel (18) vorgesehen sind, die den Strahlengang in den oberen Teil des Gehäuses zum Teleskopokular (7) lenken.

15. Teleskop nach Anspruch 14, dadurch gekennzeichnet, daß die zwei Spiegel (18) in Richtung der einfallenden Lichtstrahlen (Pfeile 61, 62) zum Zwecke der Fokussierung gemeinsam verschiebbar angeordnet sind.

16. Teleskop nach Anspruch 1, dadurch gekennzeichnet, daß das Teleskopokular aus zwei Linseneinheiten (7, 20) besteht, zwischen denen ein Planspiegel (21) vorgesehen ist.

17. Teleskop nach Anspruch 1, dadurch gekennzeichnet, daß sowohl das Teleskopobjektiv als auch das Teleskopokular chromatisch korrigiert sind.

18. Teleskop nach Anspruch 17, dadurch gekennzeichnet, daß das Objektiv als Achromat geteilt ausgebildet ist.

19. Teleskop nach Anspruch 17, dadurch gekennzeichnet, daß die Feldlinse (20) des Teleskopokulares chromatisch korrigiert ist.

20. Teleskop nach Anspruch 1 und 5, dadurch gekennzeichnet, daß der Abbildungsstrahlengang des Suchers (4, 6) über einen teildurchlässigen Spiegel (26) geführt ist und daß durch diesen Spiegel ein Leuchtkreis (30) in das Sucherbild eingespiegelt ist.

21. Teleskop nach Anspruch 1 und 5, dadurch gekennzeichnet, daß neben dem Sucher- und dem Teleskopobjektiv im Gehäuse (50) eine Beleuchtungsöffnung (3) für eine Leuchtmarkierung (30), vorzugsweise ein leuchtender Kreis, vorgesehen ist, welche im Bildfeld des Suchers erscheint.

22. Teleskop nach Anspruch 20, dadurch gekennzeichnet, daß die Beleuchtung der Suchermarkierung (30) über einen schräg von oben einfallenden Strahlengang (68) erfolgt.

23. Teleskop nach Anspruch 14, dadurch gekennzeichnet, daß für die Verschiebung der zwei Spiegel (18) ein Drehknopf (1) am oberen Ende des Gehäuses (50) in einer Ecke des Gehäuses vorgesehen ist.

24. Teleskop nach Anspruch 1 und 5, dadurch gekennzeichnet, daß in der oberen Gehäuseecke ein nach hinten oder vorn zum Gehäuse versetzter weiterer Drehknopf (5) vorgesehen ist, welcher Blenden (8, 10) betätigt, die zur Abdeckung der Frontlinse (2) des Teleskopobjektives und/oder des Sucherobjektives (4) und gegebenenfalls der Suchermarkenbeleuchtung dienen.

25. Teleskop nach Anspruch 24, gekennzeichnet durch Hebelübersetzungen (9, 12, 13, 14, 57, 59) für die Abdeckungen (8, 10) der Augenlinse (7) des Teleskopokulares und des Sucherokulares (6).

26. Teleskop nach Anspruch 1, dadurch gekennzeichnet, daß die Linsen des Teleskopes und des Suchers eine äußere rechteckige Form aufweisen.

27. Teleskop nach Anspruch 1, dadurch gekennzeichnet, daß neben dem Bildfeld eine Entfernungsskala (54) vorgesehen ist.

28. Teleskop nach Anspruch 27, dadurch gekennzeichnet, daß ein Prisma (23) oder ein prismatisches Linsenrandsegment für die Einspiegelung der Entfernungsskala (54) vorgesehen ist.

## Claims

1. Monocular telescope having a viewfinder, **characterized in that** the telescope and the viewfinder have a common viewing direction (66), that a mirror system is provided in the telescope beam path, that the viewfinder has at least one viewfinder objective (4) and one viewfinder eyepiece (6) which have one optical axis (63), that the telescope has at least one telescope objective (2, 17) and one telescope eyepiece (20, 7) with an eye lens (7), and that the axes (63, 65) of the viewfinder eyepiece (6) and of the telescope eyepiece (7) intersect behind the eyepieces (6, 7) in the ocular pivot point (28) of the observer.

2. Telescope according to claim 1, characterized in that the eye lens (7) of the telescope eyepiece and the viewfinder eyepiece (6) are positioned directly above each other.

3. Telescope according to claim 1, characterized in that the optical axis (65) of the eye lens (7) of the telescope eyepiece is directed diagonally upwards towards the eye.

4. Telescope according to claim 1, characterized in that the optical axis of the viewfinder (4, 6) runs linearly to the eye.

5. Telescope according to claim 1, characterized in that a housing (50) which is flattened in viewing direction (66) encloses the telescope and the viewfinder.

6. Telescope according to claim 1 and claim 5, characterized in that the viewfinder beam path passes approximately vertically through the flat side of the housing (50).

7. Telescope according to claim 5, characterized in that the imaging beam path of the telescope is angled in such a way that the optical axis in the housing (50) describes essentially a flat, approximately rectangular path.

8. Telescope according to claim 1 and claim 5, characterized in that the housing is formed approximately rectangularly and the longer side of the rectangle points downwards when the telescope is in use.

9. Telescope according to claim 1 and claim 5, characterized in that the front lens (2) of the telescope objective and the front lens (4) of the viewfinder objective are provided on one side of the housing (50) and the eye lens (7) of the telescope eyepiece and the viewfinder eyepiece (6) on the rear of the housing.

10. Telescope according to claim 1, characterized in that the front lens (2) of the telescope objective is located in the upper part of the housing (50) and the eye lens (7) of the telescope eyepiece likewise, but on its rear, and that both lenses are positioned offset to the centre line (67) of the housing.

11. Telescope according to claim 1 and claim 5, characterized in that the telescope objective consists of two lens units (2, 17) separated from each other, between which the first plane mirror (16) of the inversion system is provided in such a way that it directs the imaging beam path into the lower part of the housing (50).

12. Telescope according to claim 11, characterized in that the plane mirror (16) is positioned between the lens units diagonally to the axis of incidence of the light beams with a slight deviation from 45°.

13. Telescope according to claim 11, characterized in that the mirror (16) directs the beam path downwards slightly diagonally to the side of the objective.

14. Telescope according to claim 11, characterized in that two mirrors (18) which direct the beam path into the upper part of the housing to the telescope eyepiece (7) are provided in the lower part of the housing (50).

15. Telescope according to claim 14, characterized in that the two mirrors (18) are positioned jointly movably in the direction of the incident light beams (arrows 61, 62) for the purpose of focusing.

16. Telescope according to claim 1, characterized in that the telescope eyepiece consists of two lens units (7, 20) between which a plane mirror (21) is provided.

17. Telescope according to claim 1, characterized in that both the telescope objective and the telescope eyepiece are chromatically corrected.

18. Telescope according to claim 17, characterized in that the objective has a divided form as an achromatic objective.

19. Telescope according to claim 17, characterized in that the field lens (20) of the telescope eyepiece is chromatically corrected.

20. Telescope according to claim 1 and claim 5, characterized in that the imaging beam path of the viewfinder (4, 6) is guided via a partially translucent mirror (26) and that a luminous circle (30) is mirrored through this mirror into the viewfinder image.

21. Telescope according to claim 1 and claim 5, characterized in that an illuminating opening (3) for a luminous marking (30), preferably a luminous circle, which appears in the image field of the viewfinder, is provided beside the viewfinder objective and the telescope objective in the housing (50).

22. Telescope according to claim 20, characterized in that the illumination of the viewfinder marking (30) is effected via a beam path (68) falling diagonally from above.

23. Telescope according to claim 14, characterized in that a turning knob (1) is provided at the upper end of the housing (50) in one corner of the housing for the moving of the two mirrors (18).

24. Telescope according to claim 1 and claim 5, characterized in that a further turning knob (5), offset from the housing towards the back or the front, which operates diaphragms (8, 10) which serve to cover the front lens (2) of the telescope objective and/or of the viewfinder objective (4) and where applicable of the viewfinder mark illumination, is provided in the upper corner of the housing.

25. Telescope according to claim 24, characterized by lever transmissions (9, 12, 13, 14, 57, 59) for the covers (8, 10) of the eye lens (7) of the telescope eyepiece and of the viewfinder eyepiece (6).

26. Telescope according to claim 1, characterized in that the lenses of the telescope and of the viewfinder have an external rectangular form.

27. Telescope according to claim 1, characterized in that distance scale (54) is provided beside the image field.

28. Telescope according to claim 27, characterized in that a prism (23) or a prismatic lense margin segment is provided for mirroring in the distance scale (54).

## Revendications

1. Un télescope monoculaire ayant un chercheur, **carac térisé en ce que** le télescope et le chercheur ont une direction de visée (66) commune, en ce qu'un sytème de miroir est prévu dans le trajet des rayons du télescope, en ce que le chercheur a au moins un objectif de chercheur (4) et un oculaire de chercheur (6) qui ont un axe (63) optique, en ce que le télescope a au moins un objectif de télescope (2, 17) et un oculaire de télescope (20, 7) avec une lentille oculaire (7), et en ce que les axes (63, 65) de l'oculaire du chercheur (6) et de l'oculaire du télescope (7) se recoupent derrière les oculaires (6, 7) au centre de rotation de l'oeil (28) de l'observateur.

2. Télescope selon la revendication 1, caractérisé en ce que la lentille (7) de l'oculaire télescopique et l'oculaire du chercheur (6) sont disposés directement l'un au-dessus de l'autre.

3. Télescope selon la revendication 1, caractérisé en ce que l'axe optique (65) de la lentille (7) de l'oculaire du télescope est dirigé en biais vers l'oeil et vers le haut.

4. Télescope selon la revendication 1, caractérisé en ce que la course de l'axe optique du chercheur (4, 6) en direction de l'oeil est en ligne droite.

5. Télescope selon la revendication 1, caractérisé en ce qu'un boîtier (50) contient le télescope et le chercheur, lequel est de constitution plate dans la direction de la visée (66).

6. Télescope selon les revendications 1 et 5, caractérisé en ce que le trajet des rayons du chercheur traverse à peu près verticalement le côté plat du boîtier (50).

7. Télescope selon la revendication 5, caractérisé en ce que le faisceau de reproduction du télescope est coudé de telle sorte que l'axe optique dans le boîtier (50) décrit principalement une course plate, presque orthogonale.

8. Télescope selon les revendications 1 et 5, caractérisé en ce que le boîtier est presque constitué rectangulairement et que lors de l'utilisation du télescope, les grands côtés du rectangle sont dirigés vers le bas.

9. Télescope selon les revendications 1 et 5, caractérisé en ce que la lentille frontale (2) de l'objectif du télescope et la lentille frontale (4) de l'objectif du chercheur sont prévues sur l'un des côtés du boîtier (50) et que la lentille (7) de l'oculaire du télescope ainsi que l'oculaire du chercheur (6) se trouvent sur la face arrière du boîtier.

10. Télescope selon la revendication 1, caractérisé en ce que la lentille frontale (2) de l'objectif du télescope est installée dans la partie supérieure du boîtier (50) ainsi que la lentille (7) de l'oculaire du télescope mais cependant sur la face arrière de celui-ci et en ce que les deux lentilles sont disposées décalées par rapport à la ligne médiane (67) du boîtier.

11. Télescope selon les revendications 1 et 5, caractérisé en ce que l'objectif du télescope est constitué par deux unités de lentilles (2, 17) séparées l'une de l'autre, entre lesquelles le premier miroir plan (16) du système de renversement est prévu, de telle sorte que celui-ci dirige le faisceau de reproduction dans la partie inférieure du boîtier (50).

12. Télescope selon la revendication 11, caractérisé en ce que le plan miroir (16) entre les unités de lentilles est disposé incliné d'une angle différenciant peu de 45° par rapport à l'axe d'incidence des faisceaux lumineux.

13. Télescope selon la revendication 11, caractérisé en ce que le miroir (16) dirige le trajet des rayons légèrement incliné vers le bas vers le côté de l'objectif.

14. Télescope selon la revendication 11, caractérisé en ce que deux miroirs (18) sont prévus dans la partie inférieure du boîtier (50) qui dirigent le trajet des rayons dans la partie supérieure du boitier vers l'oculaire du télescope (7).

15. Télescope selon la revendication 14, caractérisé en ce que les deux miroirs (18) sont installés réglables en commun en direction des rayons de lumière incidents (flèches 61, 62) aux fins de focalisation.

16. Télescope selon la revendication 1, caractérisé en ce que l'oculaire du télescope est constitué de deux unités de lentilles (7, 20) entre lesquelles on a prévu un miroir plan (21).

17. Télescope selon la revendication 1, caractérisé en ce qu'aussi bien l'objectif du télescope que l'oculaire du télescope sont corrigés chromatiquement.

18. Télescope selon la revendication 17, caractérisé en ce que l'objectif est constitué sous forme d'achromat divisé.

19. Télescope selon la revendication 17, caractérisé en ce que la lentille de champ (20) de l'oculaire du télescope est corrigée chromatiquement.

20. Télescope selon les revendications 1 et 5, caractérisé en ce que le faisceau de reproduction du chercheur (4, 6) passe par un miroir (26) en partie transparent et en ce qu'un cercle lumineux (30) est reflété dans l'image du chercheur par ce miroir.

21. Télescope selon les revendications 1 et 5, caractérisé en ce qu'une ouverture d'éclairage (3) est prévue dans le boîtier (50) à côté de l'objectif du chercheur et de l'objectif du télescope pour un repère lumineux (30), de préférence un cercle lumineux lequel apparait dans le champs d'image du chercheur.

22. Télescope selon la revendication 20, caractérisé en ce que l'éclairage du repère du chercheur (30) est réalisé par untrajet des rayons (68) tombant en biais du haut.

23. Télescope selon la revendication 14, caractérisé en ce que pour le décalage des deux miroirs (18) un bouton rotatif (1) est prévu à l'extrémité supérieure du boîtier (50) dans un coin du boîtier.

24. Télescope selon les revendications 1 et 5, caractérisé en ce qu'un autre bouton rotatif (5) est prévu dans le coin supérieur du boîtier, lequel est décalé vers l'arrière ou vers l'avant en direction du boîtier, et qui commande des panneaux (8, 10) qui servent à recouvrir la lentille frontale (2) de l'objectif du télescope et/ou de l'objectif du chercheur (4) et le cas échéant de l'éclairage repère du chercheur.

25. Télescope selon la revendication 24, caractérisé par des rapports des leviers (9, 12, 13, 14, 57, 59) pour les recouvrements (8, 10) de la lentille (7) de l'oculaire du téléscope et de l'oculaire du chercheur.

26. Télescope selon la revendication 1, caractérisé en ce que les lentilles du télescope et du chercheur ont une forme extérieure rectangulaire.

27. Télescope selon la revendication 1, caractérisé en ce qu'une échelle de distance (54) est prévue à côté du champ d'image.

28. Télescope selon la revendication 27, caractérisé en ce qu'un prisme (23) ou un segment du rebord de lentille prismatique est prévu pour la réflexion de l'échelle de distance (54).
